# EUROPÄISCHE PATENTSCHRIFT

(11) **EP 1 316 347 B1**
(45) Veröffentlichungstag und Bekanntmachung des Hinweises auf die Patenterteilung: **20.10.2004**
(21) Anmeldenummer: 02024639.3
(22) Anmeldetag: 05.11.2002
(51) Int. Cl.: B01D 29/21, B01D 35/30, B01D 36/00

(54) **Flüssigkeitsfilter zum Reinigen von Kraftstoff**
Liquid filter for filtering fuel
Filtre à liquide pour purifier du carburant

(30) Priorität: 29.11.2001 DE 10158570
(43) Veröffentlichungstag der Anmeldung: 04.06.2003
(73) Patentinhaber: ROBERT BOSCH GMBH, 70442 Stuttgart (DE)
(72) Erfinder: Blazquez, Garcia, 28033 Madrid (ES); Torres, Enrique Casillas, 28017 Madrid (ES); Sancho de Castro, Manuel, 37007 Salamanca (ES)

(56) Entgegenhaltungen:
- DE-A- 19 737 192

## Beschreibung

### Stand der Technik

Die Erfindung geht aus von einem Flüssigkeitsfilter zum Reinigen von Kraftstoff nach der im Oberbegriff des Anspruchs 1 näher angegebenen Gattung.

Es ist schon ein solches Flüssigkeitsfilter zum Reinigen von Kraftstoff aus der DE 197 37 192 A1 bekannt, bei dem das Gehäuse in Vollkunststoffausführung ausgeführt ist. Dabei hat das Gehäuse ein becherförmiges Unterteil mit einem unterhalb des zylindrischen Filtereinsatzes liegenden Sockelabschnitt, in den neben einem Wasserspeicherraum ein temperaturabhängiges Umschaltventil für eine Kraftstoffrückführung vorgesehen ist. An diesem Sockelabschnitt sind neben dem Zulaufanschluß zwei zusätzliche Anschlußstutzen vorgesehen, an die eine externe Heizeinrichtung anschließbar ist. Der radial von außen nach innen durchströmte Filtereinsatz hat auf seiner Reinseite Verbindung mit einem Ablaufstutzen, der in einem deckelartigen Oberteil angeordnet ist, das mittels Schnellverschluß lösbar auf dem becherförmigen Unterteil befestigt ist, so dass Zulauf und Ablauf in zwei verschiedenen Gehäuseteilen liegen. Obwohl sich dieses Flüssigkeitsfilter für Dieselkraftstoff eignet und ein Vollkunststoffgehäuse aufweist, kann es in manchen Fällen von Nachteil sein, dass es nur mit einer extern angeordneten Heizeinrichtung zusammenarbeiten kann, wozu am Unterteil in aufwendiger Bauweise zwei Anschlußstutzen erforderlich sind. Auch ist das Flüssigkeitsfilter mit einem temperaturabhängigen Umschaltventil ausgerüstet, das bei bestimmten Anwendungsfällen nicht erforderlich ist; auch beansprucht das Umschaltventil Bauraum, der für den Wasserspeicherraum nicht mehr zur Verfügung steht.

Ferner ist auch ein Flüssigkeitsfilter für Dieselkraftstoff aus der EP 0 702 144 B1 bekannt, das im Gehäuse einen unterhalb des austauschbaren Filtereinsatzes liegenden Wasserspeicherraum aufweist, während im Filterkopf neben den fluidischen und elektrischen Anschlüssen eine elektrische Heizeinrichtung angeordnet ist. Dieses Filter hat ein Gehäuse aus Metall sowie einen mehrteiligen Filterkopf in Modulbauweise, so dass sich diese Gehäusebauweise schlecht für eine Vollkunststoffausführung eignet. Weiterhin fehlt hier ein Überströmventil mit einem zugeordneten Tankanschluß.

### Vorteile der Erfindung

Das erfindungsgemäße Flüssigkeitsfilter mit den kennzeichnenden Merkmalen des Hauptanspruchs hat demgegenüber den Vorteil, dass es ein einfach und kompakt bauendes Dieselfilter ermöglicht, in dessen Gehäuse in Vollkunststoffausführung ein Wasserspeicherraum auf der Reinseite sowie eine elektrische Heizeinrichtung auf der Zulaufseite integriert sind. Bei dem zweiteiligen Gehäuse läßt sich das Unterteil einstückig ausbilden, wodurch eine einfache, kostengünstige und dichte Bauweise begünstigt wird. Dabei ermöglicht der Wegfall des temperaturabhängig steuernden Umschaltventils einen größeren Wasserspeicherraum. Mit dem plattenförmigen Zwischendeckel im Unterteil ist das Trennen und Abdichtung von Heizungsraum und Wasserspeicherraum gut beherrschbar. Der Zwischendeckel ist leicht herstellbar und montierbar und kann verschiedene Funktionen übernehmen. Zusätzlich zu seiner Trenn- und Dichtfunktion dient er zur Halterung für die elektrische Heizeinrichtung und ferner als Verdrehsicherung für das Filterelement, indem der Zwischendeckel selbst durch seine Außenkontur verdrehgesichert im Unterteil angeordnet ist. Bei dieser Bauweise des Flüssigkeitsfilters können bisherige Serienteile wie deckelförmiges Oberteil und Filterelement unverändert weiter verwendet werden.

Durch die in den Unteransprüchen aufgeführten Maßnahmen sind vorteilhafte Weiterbildungen und Verbesserungen des im Anspruch 1 angegebenen Flüssigkeitsfilters möglich. Vor allem begünstigen diese Maßnahmen eine vorteilhafte Integration der elektrischen Heizeinrichtung im Unterteil des Flüssigkeitsfilters, wobei eine einfache, kompakte und kostengünstige Bauweise erzielbar ist. Dabei läßt sich der elektrische Steckanschluß für die Heizeinrichtung, der Wasserablaß und der Zulaufanschluß im wesentlichen auf einer Seite des Unterteils anordnen, wodurch neben einer leichten Montage und Handhabung auch gute Einbaumöglichkeiten im Kraftfahrzeug gegeben sind.

Weitere vorteilhafte Ausgestaltungen ergeben sich aus der Beschreibung sowie der Zeichnung.

### Zeichnung

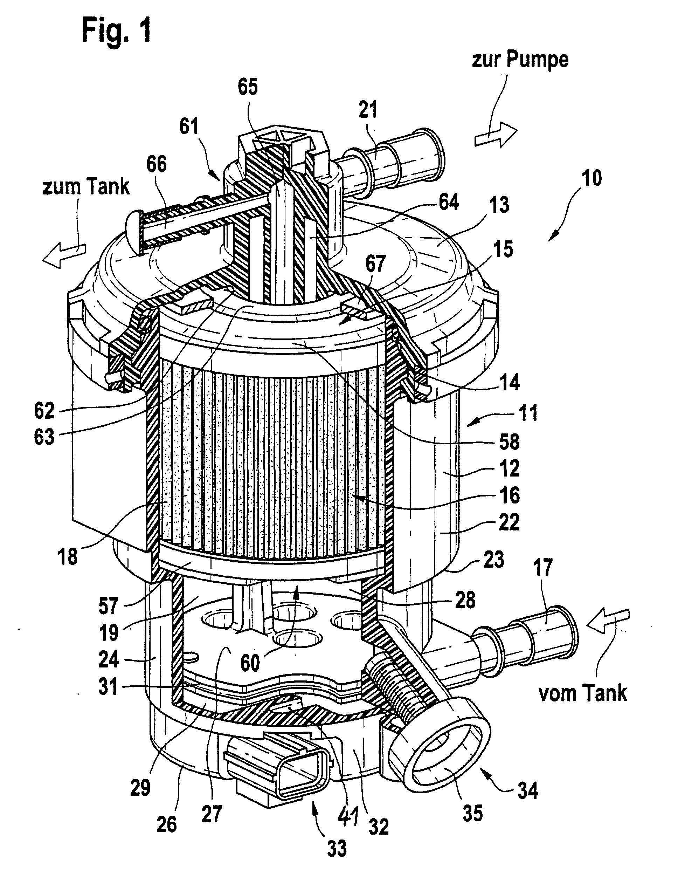

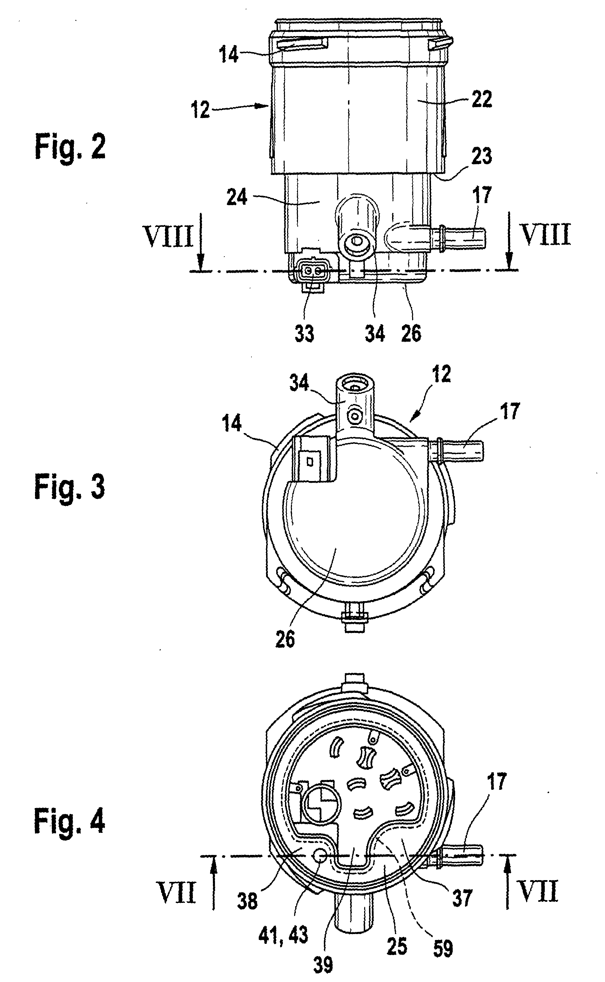

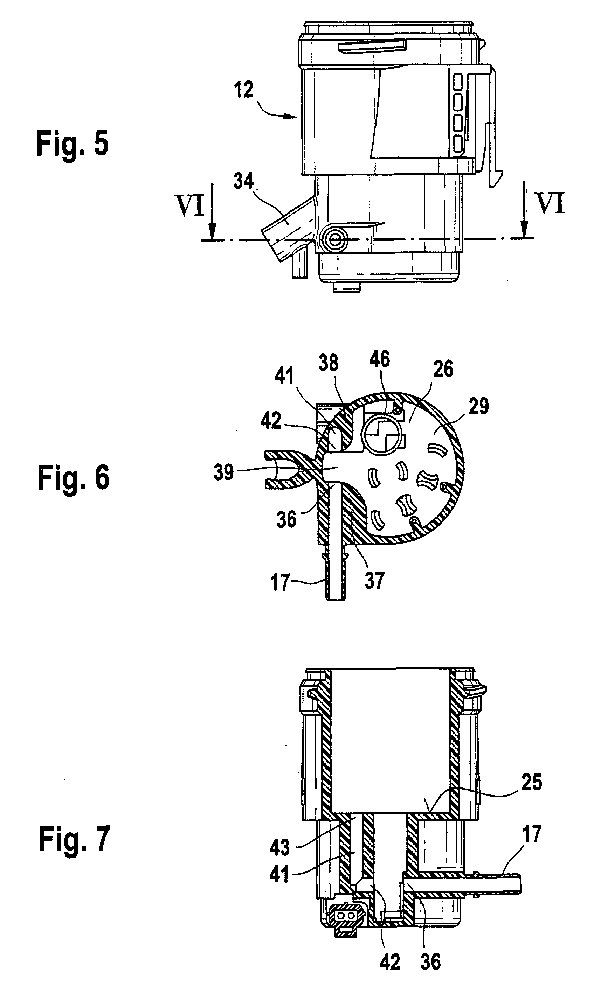

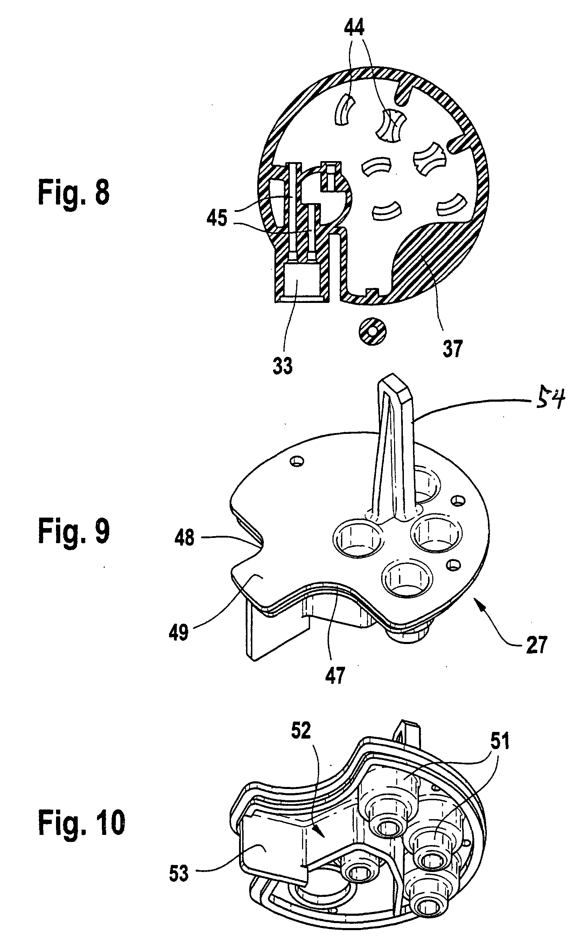

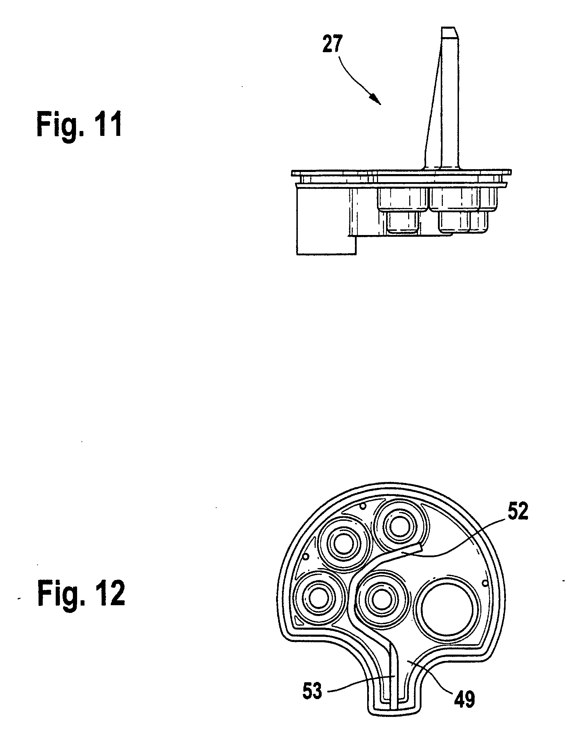

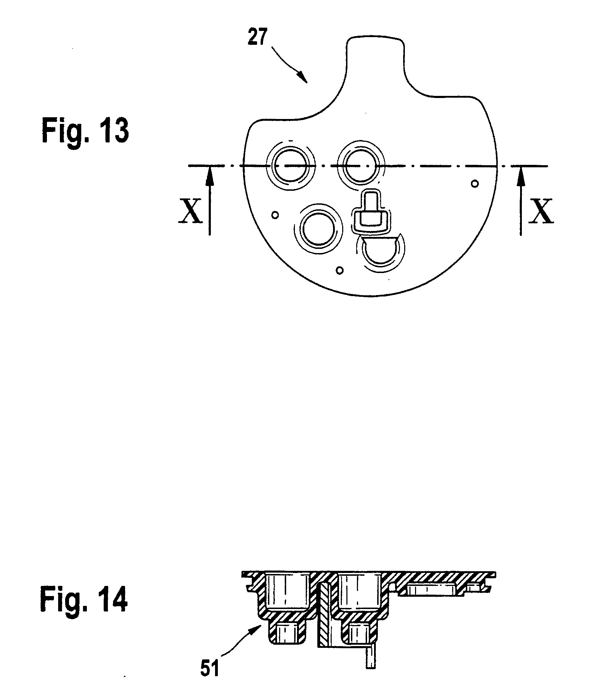

Ein Ausführungsbeispiel der Erfindung ist in der Zeichnung dargestellt und in der nachfolgenden Beschreibung näher erläutert. Es zeigen die
Figur 1
   eine perspektivische Darstellung des Flüssigkeitsfilters zum Reinigen von Kraftstoff teilweise im Schnitt,
Figur 2
   vom Gehäuse des Flüssigkeitsfilters nach Figur 1 das becherförmige Unterteil in verkleinertem Maßstab und in vereinfachter Form in einer Vorderansicht,
Figur 3
   eine Untersicht des Unterteils nach Figur 2 und
Figur 4
   eine Draufsicht auf das Unterteil nach Figur 2,
Figur 5
   zeigt eine Seitenansicht des Unterteils nach Figur 2 und
Figur 6
   einen Schnitt nach VI-VI in Figur 5; die
Figur 7
   zeigt einen Schnitt nach VII-VII in Figur 4 und
Figur 8
   einen Querschnitt nach VIII-VIII in Figur 2; die
Figur 9
   zeigt in verkleinertem Maßstab in perspektivischer Darstellung den Zwischendeckel nach Figur 1 von oben und entsprechend die
Figur 10
   von unten, während
Figur 11
   eine Vorderansicht des Zwischendeckels nach Figur 9 darstellt; die
Figur 12
   zeigt eine Untersicht des Zwischendeckels nach Figur 11, während
Figur 13
   eine Draufsicht dieses Zwischendeckels zeigt;
Figur 14
   zeigt einen Schnitt nach X-X in Figur 13.

### Beschreibung des Ausführungsbeispiels

Die Figur 1 zeigt eine perspektivische Darstellung eines Flüssigkeitsfilters 10 zum Reinigen von Dieselkraftstoff in teilweise aufgeschnittener Form. Das Flüssigkeitsfilter hat ein zweiteiliges Gehäuse 11, das in Vollkunststoffausführung ausgebildet ist. Das Gehäuse 11 hat ein im wesentlichen becherförmiges Unterteil 12 und ein deckelförmiges Oberteil 13, die beide aus Kunststoff bestehen. Unterteil und Oberteil sind durch einen Schnell-Schraubverschluß 14 lösbar miteinander verbunden, wozu ein entsprechendes Steilgewinde vorgesehen ist und das Oberteil 13 das Unterteil 12 außen übergreift. In dem vom Unterteil 12 und Oberteil 13 eingeschlossenen Innenraum 15 ist ein radial von außen nach innen durchströmter Filtereinsatz 16 angeordnet, der zwischen eine mit einem Zulaufanschluß 17 verbundene Schmutzseite 18 und einen mit einer Reinseite 19 verbundenen Ablaufanschluß 21 geschaltet ist.

Wie die Figur 1 in Verbindung mit den Figuren 2, 3 und 4, welche in verkleinertem Maßstab eine Vorderansicht, eine Untersicht sowie eine Draufsicht des Unterteils 12 nach Figur 1 näher zeigen, geht das becherförmige Unterteil 12 von einem kreiszylindrischen, zum Oberteil hin offenen Abschnitt 22 über eine ringförmige Schulter 23 in einen Sockelabschnitt 24 über, dessen Außendurchmesser gegenüber dem Abschnitt 22 verringert ist. Die Schulter 23 bildet dadurch eine dem Innenraum 15 zugewandte, ringförmig verlaufende Schulterfläche 25. Wie die Figur 1 näher zeigt, ist in dem unterhalb der Schulter 23 liegenden Sockelabschnitt 24 zwischen dessen Boden 26 und dem Filtereinsatz 16 ein plattenförmiger Zwischendeckel 27 angeordnet, der einen zum Filtereinsatz 16 hin liegenden Wasserspeicherraum 28 von einem zum Boden 26 hin liegenden Heizungsraum 29 trennt. Dieser Zwischendeckel 27, wie er in verkleinertem Maßstab in den Figuren 9 bis 14 näher dargestellt ist, läßt sich in einfacher Weise aus Kunststoff herstellen und trägt an seiner Außenkontur einen Dichtring 31, so dass der eingebaute Zwischendeckel 27 den mit der Reinseite 19 verbundenen Wasserspeicherraum 28 in dichter Weise von dem mit der Schmutzseite 18 verbundenen Heizungsraum 29 trennt. In dem Heizungsraum 29 ist eine elektrische Heizeinrichtung 32 angeordnet, die über einen elektrischen Steckanschluß 33 mit Energie versorgbar ist. Ferner ist am Sockelabschnitt 24 eine Wasserablaßeinrichtung 34 angeordnet, die mit dem Wasserspeicherraum 28 Verbindung hat und eine übliche Ablaufschraube 35 aufweist. Wie Figur 1 deutlich zeigt, sind der elektrische Steckanschluß 33, die Wasserablaßeinrichtung 34 sowie der Zulaufanschluß 17 an einer Seite des Gehäuses 11 ausgebildet, so dass Handhabung, Montage und Einbau des Flüssigkeitsfilters 10 in einem Kraftfahrzeug möglichst erleichtert werden.

Wie die Figur 1 vor allem in Verbindung mit Figur 6 näher zeigt, führt der Zulaufanschluß 17 in etwa tangential an den Sockelabschnitt 24 heran, wobei er über eine Öffnung 36 in den Heizungsraum 29 mündet. Wie vor allem die Figuren 4, 6 bzw. 8 näher zeigen, weist zu diesem Zweck der Sockelabschnitt 24 eine in seiner Wand liegende, achsparallel zur Längsachse des Gehäuses 11 verlaufende hülsenförmige Verdickung 37 auf, die sich vom Boden 26 bis in die Schulterfläche 25 erstreckt. Auf diese Weise kann der Zulaufanschluß 17 stabil ausgeführt werden und tangential in den Heizungsraum 26 münden. Wie die Figuren 4 und 6 näher zeigen, liegt im Heizungsraum 29 der ersten Verdickung 37 eine zweite hülsenförmige Verdickung 38 gegenüber, die ebenfalls in der Wand des Sockelabschnitts 24 achsparallel verläuft und sich durch den Wasserspeicherraum 28 hindurch bis zur Schulterfläche 25 erstreckt. Diese beiden Verdickungen 37 und 38 bilden auf diese Weise zwischen sich einen Spalt 39. Die zweite Verdickung 38 ist im Querschnitt kleiner wie die erste Verdickung 37 und nimmt in ihrem Inneren einen achsparallel verlaufenden Kanal 41 auf, der über eine zweite Öffnungen 42 einerseits in den Spalt 39 mündet, während sein anderes Ende über eine dritte Öffnung 43 in die Schulterfläche 25 mündet. Die Öffnungen 36 und 42 liegen somit im Heizungsraum 29 einander gegenüber, so dass sie durch eine gemeinsame Bohrung leicht herstellbar sind.

Wie die Figuren 4, 6 bzw. 8 besonders deutlich zeigen, sind am Boden 26 des Unterteiles 12 senkrecht in den Heizungsraum 29 ragende Stege 44 angeordnet, die jeweils paarweise angeordnet sind und eine Sichelform aufweisen, so dass in an sich bekannter Weise jeweils zwei Stege 44 ein scheibenförmiges PTC-Heizungselement in radialer Richtung haltern. Die Stege 44 sind hier so ausgebildet, dass sie vier nicht näher gezeichnete, scheibenförmige Heizungselemente aufnehmen können. Dabei können in an sich bekannter Weise die Heizungselemente zwischen elektrisch leitenden, parallel zum Boden 26 sich erstreckenden Halterungsblechen angeordnet werden, die mit den Polen 45 des elektrischen Steckanschlusses 33 leitend verbunden sind. Zusätzlich ist noch am Boden 26 eine Halterung 46 für einen temperaturabhängigen Schalter vorgesehen, der hier nicht näher gezeichnet ist.

Nach dem Einbau einer elektrischen Heizeinrichtung 32 in den Heizungsraum 29 wird der Zwischendeckel 27 in den Sockelabschnitt 24 eingefügt, so dass die beiden Räume 28 und 29 dicht voneinander getrennt sind. Wie vor allem die Figuren 9 und 10 näher zeigen, weist der Zwischendeckel 27 zu diesem Zweck die gleiche Außenkontur auf wie die zugehörige Innenkontur im Heizungsraum 29. Die Außenkontur des plattenförmigen Zwischendeckels wird dabei in zweckmäßiger Weise als ein Kreis ausgebildet, an dem im geringen Abstand voneinander von der Außenkontur ausgehende, nach innen zu verlaufende Einbuchtungen 47 und 48 ausgebildet sind, so dass zwischen diesen Einbuchtungen ein Steg 49 verbleibt. Die Formen der Einbuchtungen 47 und 48 entspricht dabei den Formen der Verdickungen 37 bzw. 38, so dass der verbleibende Steg 49 den Spalt 39 abdecken kann. An dem Zwischendeckel 27 sind ferner vier zylindrische, in den Heizungsraum 29 ragende Noppen 51 ausgebildet, welche zur Halterung der Heizungselemente dienen. Wie die Figur 10 in Verbindung mit Figur 12 besonders deutlich zeigt, ist an der Unterseite des Zwischendeckels 27 eine etwa hackenförmig verlaufende Trennwand 52 angeordnet, die mit einer Prallwand 53 auch in der Mitte des Steges 49 verläuft. Bei eingebautem Zwischendeckel 27 kommt diese Prallwand 53 zwischen die beiden Öffnungen 36 und 42 zu liegen, wobei die Höhe der Prallwand 53 so groß gewählt ist, dass keine direkte, durchgehende Verbindung zwischen diesen beiden Öffnungen entsteht. Auf der Oberseite des Zwischendeckels 27 ist eine fingerartige Rippe 54 angeordnet, die als Verdrehsicherung für den Filtereinsatz 16 dient und dort in eine entsprechende Nut greift.

Bei dem im Innenraum 15 des Gehäuses 11 angeordneten Filtereinsatz 16 handelt es sich um einen üblichen kreisringförmigen Sternfiltereinsatz, der an seiner unteren Endkappe 57 und an seiner oberen Endkappe 58 zur Trennung von Schmutz-Seite 18 und Reinseite 19 abgedichtet wird. Zu diesem Zweck ist an der ringförmigen unteren Endkappe 57 eine besondere Formdichtung 59 (siehe Figur 4) angeordnet, welche die Abdichtung zwischen der Schulterfläche 25 im Unterteil 12 und dem Filtereinsatz 16 übernimmt. Die Formdichtung 59 hat dabei einen in Figur 4 dargestellten Verlauf, wobei sie entsprechend den Verdickungen 37 bzw. 38 entsprechende Einbuchtungen aufweist, wie dies bereits beim eingangs erwähnten, gattungsbildenden Stand der Technik der Fall ist. Die axiale Höhe der Formdichtung 59 ist dabei so groß gewählt, dass zwischen der dritten Öffnung 43 des Kanals 41 und der unteren Endkappe 57 eine ausreichend hohe, radial sich erstreckende Ausnehmung 60 mit einem Durchflußquerschnitt verbleibt, über den das zu reinigende Druckmittel vom Kanal 41 nach außen in den ringförmigen Raum zwischen dem Filtereinsatz 16 und dem Abschnitt 22 des Gehäuses 11 strömen kann.

Am deckelförmigen Oberteil 13 ist zentral ein zylindrischer Rohrstutzen 61 ausgebildet, der in den Filtereinsatz 16 hineinragt und an dessen Mantelfläche 62 eine ringförmige Dichtmanschette 63 anliegt. Diese Dichtmanschette 63 sitzt am inneren Rand der oberen Endkappe 58 und dichtet somit zwischen Schmutzseite 18 und Reinseite 19 ab. An dem Rohrstutzen 61 ist der Ablaufanschluß 21 angeordnet, der als radial abstehender Schlauchanschlußstutzen ausgeführt ist und der über einen Ablaufkanal 64 mit ringförmigem Querschnitt mit der Reinseite 19 in Verbindung steht. Der ringförmige Ablaufkanal 64 umgibt einen zentral liegenden, zweiten Ablaufkanal 65, der in winkliger Form geführt ist und zu einem zweiten Ablaufanschluß 66 führt. Der zweite Ablaufanschluß 66 liegt gleichachsig zum ersten Ablaufanschluß 21 und ist wie dieser als Schlauchanschlußstutzen ausgeführt. Der zweite Ablaufkanal 65 weist am Ende des Rohrstutzens 61 eine in die Reinseite 19 hineinragende, nicht dargestellte rohrförmige Verlängerung auf, an der ein Überströmventil befestigt ist. Diese Bauweise mit dem Überströmventil ist an sich bekannt aus der eingangs erwähnten gattungsbildenden Druckschrift und deshalb nicht näher gezeichnet; dieses Überströmventil ermöglicht ein Abströmen von Druckmittel aus der Reinseite 19 zum zweiten Ablaufanschluß 66, wenn der im Überströmventil eingestellte Druck überschritten wird.

Um den Filtereinsatz 16 im Innenraum 15 in seiner Lage zu halten, ist zwischen dem Oberteil 13 und der oberen Endkappe 58 eine Wellfeder 67 angeordnet, welche den Filtereinsatz 16 mit seiner Formdichtung 59 auf die Schulterfläche 25 drückt und somit für eine sichere Abdichtung zwischen Schmutzseite und Reinseite sorgt.

Die Wirkungsweise des Flüssigkeitsfilters 10 wird wie folgt erläutert, wobei die grundsätzliche Funktion derartiger Filter als bekannt vorausgesetzt wird, wobei auf die eingangs erwähnte gattungsbildende Bauart nach DE 197 37 192 A2 hingewiesen wird.

Der zu reinigende Dieselkraftstoff wird dem Flüssigkeitsfilter 10 am Zulaufanschluß 17 zugeführt und fließt über dessen gerade Bohrung und die erste Öffnung 36 unmittelbar in den Heizungsraum 29 der elektrischen Heizeinrichtung 32, wie dies aus Figur 1 in Verbindung mit Figur 6 erkennbar ist. Im Heizungsraum 29 trifft dieser Druckmittelstrom auf die zwischen den Öffnungen 36 und 42 liegende Prallwand 53 des plattenförmigen Zwischendeckels 27, so dass der Druckmittelstrom von der hakenförmig verlaufenden Trennwand 52 in etwa schleifenförmig durch den Heizungsraum 29 geleitet wird. Ist der Kraftstoffstrom zu kalt, so ist die elektrische Heizeinrichtung 32 durch den in der Halterung 46 angeordneten elektrischen Schalter aktiviert und die scheibenförmigen PTC-Heizelemente können den Kraftstoffstrom aufwärmen. Nach dem Durchströmen der Heizeinrichtung 32 fließt der erwärmte Kraftstoffstrom auf der anderen Seite der Prallwand 53 wieder in den Spalt 39 und gelangt über die zweite Öffnung 42 in den Kanal 41, wie des besonders deutlich in Figur 7 erkennbar ist. Mit Hilfe des achsparallel verlaufenden Kanals 41 wird der Kraftstoff durch den auf der Reinseite 19 liegenden Wasserspeicherraum 28 hindurchgeführt und gelangt zur dritten Öffnung 43 in der Schulterfläche 25. Durch die von der Formdichtung 59 zwischen der unteren Endkappe 57 sowie der Schulterfläche 25 gebildeten Ausnehmung 60 gelangt der Kraftstoff von der dritten Öffnung 43 auf die Schmutzseite 18 des Filtereinsatzes 16, wobei er in den Ringraum zwischen dem Filtereinsatz 16 und dem Abschnitt 22 des Gehäuse-Unterteils 12 strömt. Der Dieselkraftstoff durchströmt danach radial von außen nach innen den sternförmig aufgebauten Filtereinsatz 16 und gelangt gereinigt auf die Reinseite 19. Beim Durchströmen des Filterpapiers im Filtereinsatz 16 wird nicht nur der Kraftstoff vom Schmutz gesäubert, sondern auch Wasser abgeschieden, das dann auf der Reinseite 19 über eine in der unteren Endkappe 57 vorhandene zentrale Öffnung hinunter in den Wasserspeicherraum 28 gelangt und sich dort sammeln kann. Der auf der Reinseite 19 liegende Wasserspeicherraum 28 ist dabei von dem plattenförmigen Zwischendeckel 27 in dichter Weise von dem auf der Schmutzseite liegenden Heizungsraum 29 getrennt. Abgeschiedenes Wasser kann aus dem Wasserspeicherraum 28 über die Wasserablaßeinrichtung 34 durch Öffnen der Ablaßschraube 35 entfernt werden. Der gereinigte Kraftstoff gelangt von der Reinseite 19 über den ersten Ablaufkanal 64 mit ringförmigem Querschnitt zum ersten Ablaufanschluß 21 und von dort weiter zu einer Einspritzpumpe bzw. einem Einspritzsystem. Bei Überschreiten eines vorgegebenen Drucks kann auch von der Reinseite 19 Kraftstoff über das nicht näher gezeichnete Überströmventil zum zweiten Ablaufanschluß 66 abströmen und von dort zum Tank zurückfließen. Bei diesem Flüssigkeitsfilter 10, das in aufrechter Lage eingebaut und betrieben wird, ist somit dem Filtereinsatz 16 in dem ankommenden Kraftstoffstrom stets eine temperaturabhängig gesteuerte Heizeinrichtung 32 vorgeschaltet, so dass ein Verstopfen des Filters bei kalten Temperaturen vermieden wird.

Bei vorliegendem Flüssigkeitsfilter 10, bei dem die Wasserabscheidung, die elektrische Heizeinrichtung und das Überströmventil integriert sind, läßt sich das Gehäuse 11 in Vollkunststoffausführung herstellen, wobei nur ein einstückiges Unterteil 12 und ein Oberteil 13 nötig sind, die bei einem Austausch eines verbrauchten Filtereinsatzes 16 leicht voneinander trennbar sind. Das Flüssigkeitsfilter 10 baut besonders kompakt, wobei der Wasserspeicherraum 28 und die Heizungseinrichtung 32 auf engstem Raum unterhalb des Filtereinsatzes 16 angeordnet sind, wobei der plattenförmige Zwischendeckel die beiden Räume dicht voneinander trennt. Der Wasserspeicherraum 28 kann hierbei relativ groß ausgelegt werden. Die elektrische Heizungseinrichtung 32, der Zwischendeckel 27 und der Filtereinsatz 16 sind im einstückigen Unterteil 12 von dessen offener Seite her leicht montierbar, wobei vor allem der Zwischendeckel und der Filtereinsatz durch ihre Bauweise eine definierte Einbaulage ergeben und somit gegen Verdrehen gesichert sind. Als Filterelement 16 und als deckelförmiges Oberteil 13 lassen sich dabei bereits vorhandene Bauelemente verwenden. Bei dieser Bauweise lassen sich der elektrische Steckanschluß 33, die Wasserablaßeinrichtung 34 sowie der Zulaufanschluß 17 auf einer Seite des Flüssigkeitsfilters 10 anordnen, wodurch sich neben einfacher Handhabung und Montage auch gute Einbaumöglichkeiten im Kraftfahrzeug ergeben.

Selbstverständlich sind an dem gezeigten Flüssigkeitsfilter 10 Änderungen möglich, ohne vom Gedanken der Erfindung abzuweichen. Insbesondere kann die Bauart des Zwischendeckels 27 und der ersten Verdickung 37 variiert werden, ohne vom Gedanken der Erfindung abzuweisen, vor allem kann der Zwischendeckel im Wasserspeicherraum mit einer ebenen Oberfläche ausgebildet werden, so dass die Vertiefungen in den Noppen entfallen.

## Patentansprüche

1. Flüssigkeitsfilter zum Reinigen von Kraftstoff mit einem aus Kunststoff bestehenden Gehäuse (11) das ein becherförmiges Unterteil mit einem Zulaufanschluß (17) und ein deckelartiges Oberteil mit einem Ablaufanschluß (21) für gereinigten Kraftstoff aufweist, wobei Unterteil und Oberteil lösbar miteinander verbunden sind und in ihrem Inneren einen zylindrischen, austauschbaren Filtereinsatz (16) aufnehmen, der radial von außen nach innen durchströmt ist und der zwischen Zulauf- (17) und Ablaufanschluß (21) geschaltet ist, wobei seine obere stirnseitige Endkappe (58) dichtend am Oberteil anliegt, während seine untere Endkappe (57) zur Abdichtung zwischen Schmutz- (18) und Reinseite (19) im Gehäuse an einer ringförmigen Schulter (23) anliegt, die im Unterteil am Übergang in einen Sockelabschnitt (24) mit kleinerem Durchmesser ausgebildet ist, wobei am Sockelabschnitt (24) der Zulaufanschluß (17) angeordnet ist und in ihm ein Wasserspeicherraum (28) liegt, und bei dem der Wasserspeicherraum (28) von mindestens einer in dessen Wand parallel zur Längsachse des Filters verlaufenden, hülsenförmigen Verdickung (37) durchdrungen ist, in der ein Kanal (41) verläuft, über den Kraftstoff von der Zulaufseite auf die Schmutzseite (18) am Filtereinsatz (16) strömen kann, **dadurch gekennzeichnet, dass** im Sockelabschnitt (24) zwischen dessen Boden (26) und der Schulter (23) ein plattenförmiger Zwischendeckel (27) angeordnet ist, welcher den Wasserspeicherraum (28) von einem Heizungsraum (29) trennt, in dem eine elektrische Heizeinrichtung (32) angeordnet ist und dass der Zulaufanschluß (17) in diesen an den Boden (26) grenzenden Heizungsraum (29) mündet, an den auch der Kanal (41) angeschlossen ist.

2. Flüssigkeitsfilter nach Anspruch 1, **dadurch gekennzeichnet, dass** der Zwischendeckel (27) eine der Innenkontur des Sockelabschnitts (24) angepaßte, gegen Verdrehung gesicherte Außenkontur aufweist und an seinem Außenumfang ein die Abdichtung zwischen Heizungsraum (29) und Wasserspeicherraum (28) übernehmender Dichtring (31) angeordnet ist.

3. Flüssigkeitsfilter nach Anspruch 1 oder 2, **dadurch gekennzeichnet, dass** der Zwischendeckel (27) für eine Verdrehsicherung des Filtereinsatzes (16) auf seiner dem Wasserspeicherraum (28) zugewandten Seite eine fingerartige Rippe (54) aufweist, die in den Filtereinsatz (16) hineinragt.

4. Flüssigkeitsfilter nach einem der Ansprüche 1 bis 3, **dadurch gekennzeichnet, dass** der Zwischendeckel (27) im Wesentlichen die Außenkontur eines Vollkreises aufweist, an dem in geringem Abstand voneinander zwei von der Außenkontur ausgehende, nach innen zu verlaufende Einbuchtungen (47, 48) ausgebildet sind, so dass diese zwischen sich einen radial verlaufenden Steg (49) bilden.

5. Flüssigkeitsfilter nach einem der Ansprüche 1 bis 4, **dadurch gekennzeichnet, dass** die Öffnungen (36, 42) vom Zulaufanschluß (17) und vom Kanal (41) in den Heizungsraum (29) in relativ geringem Abstand einander gegenüber liegen und dass zwischen ihnen eine den Druckmittelstrom schlingenförmig umleitende Trennwand (52, 53) liegt, die am Zwischendeckel (27) angeordnet ist.

6. Flüssigkeitsfilter nach einem der Ansprüche 1 bis 5, **dadurch gekennzeichnet, dass** außen am Unterteil (12) in Höhe des Heizungsraums (29) der Zulaufanschluß (17) sowie ein elektrischer Steckanschluß (33) für die Heizungseinrichtung (32) angeordnet sind.

7. Flüssigkeitsfilter nach einem der Ansprüche 1 bis 6, **dadurch gekennzeichnet, dass** die am Unterteil (12) angeordnete Wasserablaßeinrichtung (34) oberhalb vom Heizungsraum (29) in den Sockelabschnitt (24) führt und in den Wasserspeicherraum (28) mündet.

8. Flüssigkeitsfilter nach einem oder mehreren der Ansprüche 1 bis 7, **dadurch gekennzeichnet, dass** am Boden (26) des Sockelabschnitts (24) zur Halterung der Heizelemente dienende Haltestege (44), paarweise, angeordnet sind.

9. Flüssigkeitsfilter nach einem der Ansprüche 1 bis 8, **dadurch gekennzeichnet, dass** im Heizungsraum (29) ein temperaturabhängiger Schalter (46) angeordnet ist, nahe zur zweiten Öffnung (42) am Kanal (41) .

10. Flüssigkeitsfilter nach einem oder mehreren der Ansprüche 1 bis 9, **dadurch gekennzeichnet, dass** das Unterteil (12) im Bereich des Sockelabschnitts (24) mindestens eine in der Wand achsparallel verlaufende Verdickung (37, 38) aufweist, welche den Wasserspeicherraum (28) durchdringt und in welcher der Kanal (41) angeordnet ist, der in der Schulter (23) in eine auf der Schmutzseite (18) des Filtereinsatzes (16) liegende Öffnung (43) mündet.

11. Flüssigkeitsfilter nach Anspruch 10, **dadurch gekennzeichnet, dass** der Sockelabschnitt (24) eine zusätzliche achsparallele Verdickung (37) aufweist, die mit der anderen Verdickung (38) einen Spalt (36) bildet, der vom Steg (49) des Zwischendeckels (27) abgedeckt wird, und dass in die zusätzliche Verdickung (37) der Zulaufanschluß (17) geführt ist.

12. Flüssigkeitsfilter nach einem der Ansprüche 1 bis 11, **dadurch gekennzeichnet, dass** das Oberteil (13) einen zentralen in den Filtereinsatz (16) hineinragenden Rohrstutzen (61) aufweist, an dem die obere Endkappe (58) dichtend anliegt und der neben dem Ablaufanschluß (21) einen zweiten Ablaufstutzen (66) aufweist, der über ein die Reinseite (19) absicherndes Überströmventil mit der Reinseite Verbindung hat.

13. Flüssigkeitsfilter nach einem oder mehreren der Ansprüche 1 bis 12, **dadurch gekennzeichnet, dass** zwischen der unteren Endkappe (57) des zylindrischen Filtereinsatzes (16) und der Schulter (23) im Unterteil (12) eine Schmutz- und Reinseite voneinander trennende Formdichtung (59) angeordnet ist, welche die Kanalöffnung (43) in der Schulter (23) mit der Schmutzseite (18) verbindet, wobei die Formdichtung (59) im Wesentlichen eine kreisförmige Form aufweist, die mindestens eine im Bereich der Kanalöffnung (43) und deren Verdickung (38) liegende, nach Innen zu verlaufende Ausnehmung (60) aufweist.

14. Flüssigkeitsfilter nach einem der Ansprüche 1 bis 13, **dadurch gekennzeichnet, dass** das Unterteil (12) einstückig ausgebildet ist.

15. Flüssigkeitsfilter nach einem der Ansprüche 1 bis 14, **dadurch gekennzeichnet, dass** das deckelartige Oberteil (13) über einen Schnell-Schraubverschluß (14) mit dem Unterteil (12) lösbar verbunden ist.

16. Flüssigkeitsfilter nach einem der Ansprüche 1 bis 15, **dadurch gekennzeichnet, dass** die Heizeinrichtung (32) der Zwischendeckel (27) und der Filtereinsatz (16) von der gleichen Seite her in das Unterteil (12) einbaubar sind.

17. Flüssigkeitsfilter nach einem der Ansprüche 1 bis 16, **dadurch gekennzeichnet, dass** der Steckanschluß (33), die Wasserablaßvorrichtung (35) und der Zulaufanschluß (17) auf der gleichen Seite des Gehäuses (11) angeordnet sind.

## Claims

1. Liquid filter for the purification of fuel, with a housing (11) which consists of plastic and which has a bowl-shaped lower part with an inflow connection (17) and a lid-like upper part with an outflow connection (21) for purified fuel, with the lower and the upper parts being connected releasably to one another and receiving inside them a cylindrical exchangeable filter insert (16), through which the flow passes radially from the outside inwards and which is inserted between the inflow connection (17) and outflow connection (21), with the upper fore-end cap (58) of the said filter insert bearing sealingly against the upper part, whilst, for sealing off between the dirty side (18) and the clean side (19) in the housing, the lower end cap (57) of the said filter insert bears against an annular shoulder (23) which is formed in the lower part of the transition into a base portion (24) of smaller diameter, the inflow connection (17) being arranged on the base portion (24) and a water storage space (28) lying in the latter, and the water storage space (28) being penetrated by at least one sleeve-shaped thickening (37) which runs in the wall of the latter, parallel to the longitudinal axis of the filter, and in which runs a duct (41), via which fuel can flow from the inflow side onto the dirty side (18) at the filter insert (16), **characterized in that** the base portion (24) has arranged in it, between its bottom (26) and the shoulder (23), a plate-shaped intermediate lid (27) which separates the water storage space (28) from the heating space (29), in which an electrical heating device (32) is arranged, and **in that** the inflow connection (17) issues into this heating space (29) which is adjacent to the bottom (26) and to which the duct (41) is also connected.

2. Liquid filter according to Claim 1, **characterized in that** the intermediate lid (27) has an outer contour adapted to the inner contour of the base portion (24) and secured against twisting, and on the outer circumference of the said intermediate lid is arranged a sealing ring (31) which assumes sealing-off between the heating space (29) and the water storage space (28).

3. Liquid filter according to Claim 1 or 2, **characterized in that** the intermediate lid (27) has, on its side facing the water storage space (28), for securing the filter insert (16) against twisting, a finger-like rib (54) which projects into the filter insert (16).

4. Liquid filter according to one of Claims 1 to 3, **characterized in that** the intermediate lid (27) has essentially the outer contour of a complete circle, on which are formed a short distance from one another two indentations (47, 48) emanating from the outer contour and running inwards, so that these form between them a radially-running web (49).

5. Liquid filter according to one of Claims 1 to 4, **characterized in that** the orifices (36, 42) from the inflow connection (17) and from the duct (41) into the heating space (29) lie at a relatively short distance from and opposite one another, and **in that** between the said orifices lies a partition (52, 53) which diverts the pressure-medium stream in a loop-like manner and which is arranged on the intermediate lid (27).

6. Liquid filter according to one of Claims 1 to 5, **characterized in that** the inflow connection (17) and an electrical plug connection (33) for the heating device (32) are arranged, level with the heating space (29), on the outside of the lower part (12).

7. Liquid filter according to one of Claims 1 to 6, **characterized in that** the water discharge device (34) arranged on the lower part (12) leads, above the heating space (29), into the base portion (24) and issues into the water storage space (28).

8. Liquid filter according to one or more of Claims 1 to 7, **characterized in that** holding webs (44) serving for holding the heating elements are arranged in pairs on the bottom (26) of the base portion (24).

9. Liquid filter according to one of Claims 1 to 8, **characterized in that** a temperature-dependent switch (46) is arranged, near to the second orifice (42) of the duct (41), in the heating space (29).

10. Liquid filter according to one or more of Claims 1 to 9, **characterized in that** the lower part (12) has, in the region of the base portion (24), at least one thickening (37, 38) which runs axially parallel in the wall and penetrates the water storage space (28) and in which is arranged the duct (41) which issues, in the shoulder (23), into an orifice (43) lying on the dirty side (18) of the filter insert (16).

11. Liquid filter according to Claim 10, **characterized in that** the base portion (24) has an additionally axially parallel thickening (37) which forms with the other thickening (38) a gap (36) which is covered by the web (49) of the intermediate lid (27), and **in that** the inflow connection (17) is led into the additional thickening (37).

12. Liquid filter according to one of Claims 1 to 11, **characterized in that** the upper part (13) has a central tubular connection piece (61) which projects into the filter insert (16) and against which the upper end cap (58) bears sealingly and which has, in addition to the outflow connection (21), a second outflow connection piece (66) which is connected to the clean side via an overflow valve safeguarding the clean side (19).

13. Liquid filter according to one or more of claims 1 to 12, **characterized in that** a form seal (59) separating a dirty side and a clean side from one another is arranged in the lower part (12) between the lower end cap (57) of the cylindrical filter insert (16) and the shoulder (23) and connects the duct orifice (43) in the shoulder (23) to the dirty side (18), the form seal (59) having essentially a circular form which has at least one recess (60) lying in the region of the duct orifice (43) and its thickening (38) and running inwards.

14. Liquid filter according to one of Claims 1 to 13, **characterized in that** the lower part (12) is produced in one piece.

15. Liquid filter according to one of Claims 1 to 14, **characterized in that** the lid-like upper part (13) is connected releasably to the lower part (12) via a quick-action screw fastening (14).

16. Liquid filter according to one of Claims 1 to 15, **characterized in that** the heating device (32), the intermediate lid (27) and the filter insert (16) can be installed in the lower part (12) from the same side.

17. Liquid filter according to one of Claims 1 to 16, **characterized in that** the plug connection (33), the water discharge device (35) and the inflow connection (17) are arranged on the same side of the housing (11).

## Revendications

1. Filtre à liquide pour purifier le carburant comprenant un boîtier (11) composé en matière plastique et qui présente une pièce inférieure en forme de godet avec un raccord d'entrée (17) et une pièce supérieure en forme de couvercle avec un raccord de sortie (21) pour le carburant purifié, les pièces inférieures et supérieures étant reliées ensemble de manière amovible pour recevoir à l'intérieur une cartouche filtrante (16) cylindrique remplaçable traversée radialement de l'extérieur vers l'intérieur et raccordée entre le raccord d'entrée (17) et le raccord de sortie (21),
dans lequel son chapeau d'extrémité supérieure (58) du côté frontal repose de façon étanche sur la pièce supérieure, alors que son chapeau d'extrémité inférieure (57), pour rendre étanche un côté sale (18) d'un côté propre (19) dans le boîtier, repose contre un épaulement annulaire formé dans la pièce inférieure sur la jonction dans une partie de socle (24) de diamètre plus petit,
le raccord d'entrée ( 17) est disposé sur la partie de socle (24) et présente à l'intérieur une chambre d'accumulation d'eau (28), la chambre d'accumulation d'eau (28) étant traversée par au moins un renfort (37) en forme de gaine, s'étendant dans la paroi parallèlement à l'axe longitudinal du filtre, renfort dans lequel s'étend un canal (41) par lequel le carburant peut s'écouler par le côté d'alimentation sur le côté sale (18) de la cartouche filtrante (12),
**caractérisé en ce que**
dans la partie de socle (24), un couvercle intermédiaire (27) en forme de plateau disposé entre le fond (26) et l'épaulement (23), sépare la chambre d'accumulation d'eau (28) d'une chambre de chauffage (29) dans laquelle est disposé un dispositif de chauffage électrique (32), et le raccord d'entrée (17) débouche dans cette chambre de chauffage (29) contiguë au fond (26) à laquelle le canal (41) est également raccordé.

2. Filtre à liquide selon la revendication 1,
**caractérisé en ce que**
le couvercle intermédiaire (27) présente un contour extérieur protégé contre toute distorsion et adapté au contour intérieur de la partie de socle (24) et, sur sa circonférence extérieure, est disposée une bague d'étanchéité (31) assurant l'étanchéité entre la chambre de chauffage (29) et la chambre d'accumulation d'eau (28).

3. Filtre à liquide selon la revendication 1 ou 2,
**caractérisé en ce que**
le couvercle intermédiaire (27) présente sur sa face tournée vers la chambre d'accumulation d'eau (28) une nervure en forme de doigt (54) pour empêcher la cartouche filtrante (16) de tourner, nervure qui dépasse à l'intérieur de la cartouche filtrante (16).

4. Filtre à liquide selon l'une des revendications 1 à 3,
**caractérisé en ce que**
le couvercle intermédiaire (27) présente essentiellement le contour extérieur d'un cercle entier sur lequel sont configurées, à faible distance l'une de l'autre, deux indentations (47, 48) partant du contour extérieur pour s'étendre vers l'intérieur, de telle sorte que celles-ci forment entre elles une entretoise (49) s'étendant radialement.

5. Filtre à liquide selon l'une des revendications 1 à 4,
**caractérisé en ce que**
les orifices (36, 42) du raccord d'entrée (17) et du canal (41) sont situés dans la chambre de chauffage (29) à une distance relativement faible l'un de l'autre, et une paroi de séparation (52, 53) qui redirige en boucles le flux du moyen de pression, se situe entre ces orifices sur le couvercle intermédiaire (27).

6. Filtre à liquide selon l'une des revendications 1 à 5,
**caractérisé en ce qu'**
à l'extérieur sur la pièce inférieure (12), le raccord d'entrée (17) ainsi qu'une prise de raccordement électrique (33) pour le dispositif de chauffage (32) sont disposés à hauteur de la chambre de chauffage (29).

7. Filtre à liquide selon l'une des revendications 1 à 6,
**caractérisé en ce que**
le dispositif d'évacuation d'eau (34) disposé sur la pièce inférieure (12) au-dessus de la chambre de chauffage (29) conduit dans la partie de socle (24) et débouche dans la chambre d'accumulation d'eau (28).

8. Filtre à liquide selon l'une ou plusieurs des revendications 1 à 7,
**caractérisé en ce que**
sur le fond (26) de la partie de socle (24), des entretoises de support (44) servant à maintenir les éléments de chauffage sont disposées par paire.

9. Filtre à liquide selon l'une des revendications 1 à 8,
**caractérisé en ce que**
dans la chambre de chauffage (29), un commutateur (46) dépendant de la température est disposé à proximité du deuxième orifice (42) du canal (41).

10. Filtre à liquide selon l'une ou plusieurs des revendications 1 à 9,
**caractérisé en ce que**
la pièce inférieure (12) présente, au niveau de la partie de socle (24), au moins un renfort (37, 38) qui s'étend parallèlement à l'axe dans la paroi, traverse la chambre d'accumulation d'eau (28) et comporte le canal (41) débouchant dans l'épaulement (23) dans un orifice (43) situé sur le côté sale (18) de la cartouche filtrante (16).

11. Filtre à liquide selon la revendication 10,
**caractérisé en ce que**
la partie de socle (24) présente un renfort supplémentaire (37) parallèle à l'axe qui forme une fente (36) avec l'autre renfort (38), la fente étant recouverte par l'entretoise (49) du couvercle intermédiaire (27), et le raccord d'entrée (17) est dirigé dans le renfort supplémentaire (37).

12. Filtre à liquide selon l'une des revendications 1 à 11,
**caractérisé en ce que**
la pièce supérieure (13) présente un branchement tubulaire (61) dépassant à l'intérieur de la cartouche filtrante (16), contre lequel le chapeau d'extrémité (58) supérieure est disposé de façon étanche et qui présente, en plus du raccord de sortie (21), un deuxième branchement de sortie (66) en liaison avec le côté propre par une soupape de trop-plein protégeant le côté propre (19).

13. Filtre à liquide selon l'une ou plusieurs des revendications 1 à 12,
**caractérisé en ce que**
entre le chapeau d'extrémité inférieure (57) de la cartouche filtrante cylindrique (16) et l'épaulement (23), un joint moulé (59) séparant un côté sale et un côté propre l'un de l'autre et disposé dans la pièce inférieure (12), relie l'orifice (43) du canal dans l'épaulement (23) au côté sale (18), le joint moulé (59) présentant essentiellement une forme circulaire avec au moins une entaille (60) située au niveau de l'orifice (43) du canal et de son renfort (38) pour s'étendre vers l'intérieur.

14. Filtre à liquide selon l'une des revendications 1 à 13,
**caractérisé en ce que**
la pièce inférieure (12) est monobloc.

15. Filtre à liquide selon l'une des revendications 1 à 14,
**caractérisé en ce que**
la pièce supérieure (13) en forme de couvercle est reliée à la pièce inférieure (12) de manière amovible par une fermeture à vis rapide (14).

16. Filtre à liquide selon l'une des revendications 1 à 15,
**caractérisé en ce que**
le dispositif de chauffage (32), le couvercle intermédiaire (27) et la cartouche filtrante (16) peuvent être montés par le même côté dans la pièce inférieure (12).

17. Filtre à liquide selon l'une des revendications 1 à 16,
**caractérisé en ce que**
la prise de raccordement (33), le dispositif d'évacuation d'eau (35) et le raccord d'entrée (17) sont disposés sur le même côté du boîtier (11).
